# EUROPEAN PATENT APPLICATION

(11) **EP 2 448 360 A2**
(43) Date of publication of application: **02.05.2012**
(21) Application number: 11186452.6
(22) Date of filing: 25.10.2011
(51) Int. Cl.: H04W 76/02

(54) **Radio network control device, packet switching device, circuit switching device, and information reporting method**

(30) Priority: 26.10.2010 JP 2010240059
(71) Applicant: NTT DoCoMo, Inc., Tokyo 100-6150 (JP)
(72) Inventor: Horibe, Atsuo, Tokyo, 100-6150 (JP); Hiraga, Teruaki, Tokyo, 100-6150 (JP); Kawabe, Yasuhiro, Tokyo, 100-6150 (JP)
(74) Representative: Maury, Richard Philip

(57) **Abstract**

A radio network control device in a mobile communication network includes a first communication unit communicating with a packet switching device in a packet switched domain; a second communication unit communicating with a circuit switching device in a circuit switched domain; and a management unit transmitting information to the packet switching device, the information indicating whether the radio network control device can correctly communicate with the circuit switching device. The management unit transmits the information when transmitting a signal to the packet switching device via the first communication unit, the signal indicating whether the radio network control device can correctly communicate with the packet switching device, or when transmitting an attach request signal to the packet switching device via the first communication unit, the attach request signal being transmitted from a mobile station.

## Description

### BACKGROUND OF THE INVETNION

### 1.Field of the invention

The present invention generally relates to a radio network control device, a packet switching device, a circuit switching device, and an information reporting method.

### 2.Description of the Related Art

The W-CDMA system includes the Radio Access Network (RAN) and the Core Network (CN). The Radio Access Network (RAN) mainly performs radio access control, and the Core Network (CN) performs mobility management, call control, service control and the like. Further, the Radio Access Network (RAN) includes a Radio Network Controller (RNC) and a radio base station (NodeB). The Core Network (CN) includes a Circuit Switched (CS) Domain and a Packet Switched (PS) Domain. Generally, the CS Domain provides voice-related services, and the PS Domain provides data communication services. The node providing the CS Domain services is (called) a circuit switching device or a Mobile-service Switching Center (MSC). On the other hand, the node proving the PS Domain service is (called) a packet switching device or a Serving GPRS Support Node (SGSN). The MSC and the SGSN have respective interfaces with the RNC. Those interfaces between the RNC and the MSC and between the RNC and the SGNS are collectively called an "Iu" interface. More specifically, the interface between the RNC and the MSC is called an "Iu-CS", and the interface between the RNC and the SGSN is called an "Iu-PS". Further, the interface between the MSC and the SGSN is called "Gs".

In a call connection process, the information indicating whether the domain to be connected is PS (i.e., SGSN) or CS (i.e., MSC) is reported from a mobile station to the RNC (this may be called "CN Domain Identity"). In principle, one RNC controls one switching device (MSC/SGSN). This is because when there exist plural switching devices within a CS or PS domain, the RNC may not be able to determine to which switching device to transmit an uplink signals.

However, in the call connection process, When the RNC may select an appropriate switching device from among plural switching devices in the domain, it may become possible to distribute the call workload in the core network. Further, in a case where a failure occurs in a specific core node (node in the core network, e.g., the SGSN and the MSC), if another core node can be used, it may become possible to avoid the interruption of the call connection process, and provide redundant access to the core nodes. From the technical point of view, 3GPP standard specifications (specifically 3GPP TS23. 236 v8. 1.0(2009-12) and 3GPP TS25. 331 v8. 10. 0(2010-03)) describe a method for the RNC to determine the core node to be connected in a network where plural core nodes exist in a domain. This method is called "Iu-Flex (method)".

In the Iu-Flex method, typically, the attach request signal from a mobile station is delivered to one of plural SGSNs. The SGSN is operated as a packet switching device related to the communications of the mobile station. The SGSN selects one of plural MSCs, and transmits the attach request signal to the selected MSC. Based on the received attach request signal, the MSC generates a subscriber profile of the mobile station, and is operated as a switching device in a formed circuit switching network. When the SGSN selects one MSC, the MSC is required to adequately communicate with the SGSN. To that end, this selection is based on a health check condition indicating a state of the communications between the SGSN and the MSC. In existing Iu-Flex, however, even when the communications between MSC and SGSN can be adequately (correctly or normally) performed, the communications between MSC and RNC may not be adequately performed. In other words, even when the MSC having a normal health check condition of the communications with the SGSN can be selected, the health check condition of the communications with the RNC may not be normal. Because of this feature, in a case where the MSC having generated the subscriber profile is unable to adequately communicate with the RNC, when the mobile station calls (CS call) to the circuit switching network, the call may not be connected from the RNC to the MSC. As a result, the call process may have to be performed again (re-connection). Namely, the CS call may not be adequately connected. Further, in the re-connection, the SGSN selects the MSC based on the health check condition between the SGSN and the MSC in the same manner as performed before. Therefore, there is a concern that the SGSN may repeatedly select the MSC that may adequately communicate with the SGSN but may not adequately communicate with the RNC. As described above, in the Iu-Flax method in the related art, the switching device having an abnormal (i.e., not normal) health check condition may be selected as the switching device to generate the subscriber profile of the mobile station.

### SUMMARY OF THE INVENTION

An object of the present invention is to avoid the case where the switching device having an abnormal health check condition is selected as the switching device to generate the subscriber profile of the mobile station.

According to an aspect of the present invention, a radio network control device in a mobile communication network includes a first communication unit communicating with a packet switching device in a packet switched domain; a second communication unit communicating with a circuit switching device in a circuit switched domain; and a management unit transmitting information to the packet switching device, the information indicating whether the radio network control device can correctly communicate with the circuit switching device. Further, the management unit transmits the information when transmitting a signal to the packet switching device via the first communication unit, the signal indicating whether the radio network control device can correctly communicate with the packet switching device, or when transmitting an attach request signal to the packet switching device via the first communication unit, the attach request signal being transmitted from a mobile station.

### BRIEF DESCRIPTION OF THE DRAWINGS

Other objects, features, and advantages of the present invention will become more apparent from the following description when read in conjunction with the accompanying drawings, in which:
FIG. 1 is a sequence diagram illustrating a case where a mobile station performs attach in an Iu-Flex network;
FIG. 2 is a sequence diagram illustrating a case where the mobile station performs CS call after performing the attach of FIG. 1;
FIG. 3 illustrates NRI stored in a core node;
FIG. 4 is a sequence diagram illustrating a problem in the related art;
FIG. 5 is a drawing illustrating a node influenced by the problem in the related art;
FIG. 6 is a functional block diagram of an RNC;
FIG. 7 illustrates health check information (Iu-CS) stored in storage section of the RNC;
FIG. 8 illustrates health check information (Iu-PS) stored in storage section of the RNC;
FIG. 9 is a functional block diagram of an MSC;
FIG. 10 illustrates health check information (Iu-CS) stored in storage section of the MSC;
FIG. 11 illustrates health check information (Gs) stored in storage section of the MSC;
FIG. 12 is a functional block diagram of an SGSN;
FIG. 13 illustrates health check information (Gs) stored in storage section of the SGSN;
FIG. 14 illustrates health check information managed for each of the combinations of the MSC and the RNC;
FIG. 15 is a sequence diagram illustrating a case where, upon reporting the health check condition of an Iu-PS section to the SGSN, the RNC simultaneously reports the health check condition of an Iu-CS section;
FIG. 16 is a sequence diagram illustrating a case where, upon performing attach, the RNC simultaneously reports the health check conditions of the Iu-CS section; and
FIG. 17 is a sequence diagram illustrating a case where, upon reporting the health check condition of a Gs section to the SGSN, the MSC simultaneously reports the health check condition of the Iu-CS section.

### DESCRIPTION OF THE PREFERRED EMBODIMENTS

According to an embodiment of the present invention, the RNC or the MSC reports information indicating health check condition of Iu-CS section to the SGSN. By doing this, it may become possible for the SGSN to select the MSC generating the subscriber profile by referring to the health check conditions in the Gs section and the Iu-CS section.

Further, it may become possible for the SGSN to manage the health check condition in the Iu-CS section. By having this feature, during the attach, it may become possible to select an adequate MSC that generates the subscriber profile from among a plurality of MSCs having a normal health check state in Iu-CS section. Further, it may become possible to ensure the performances of CS call transmission and reception after the attach.

In the following, embodiments are described in the following order:
1. Iu-Flex
2. RNC
3. MSC
4. SGSN.
5. Operation Example
5.1 RNC reports SGSN upon health check
5.2 RNC reports SGSN upon attach
5.3 MSC reports SGSN upon health check

### Embodiment 1

### 1. Iu-Flex

The Iu-Flex method used in this embodiment is described. As described above, in the Iu-Flex method, one RNC is connected with plural core nodes, so as to improve the workload distribution and the fault tolerance. When connecting a call initiated by a mobile station (i.e., upon call connection), the RNC determines the core node or Servicing CN to be call controlled. The Servicing CN is a core node storing the subscriber profile of the mobile station that initiates the call. The core node includes an identifier, which enables to uniquely identify the core node in CS and PS domains in a Pool Area. The identifier may be called an NRI (Network Resource Identifier). The Pool Area refers to plural core nodes connected to a single RNC (i.e., choices of the core nodes). Specifically, the core nodes which are switching devices also perform various processes such as management of subscriber information, mobility management, sending/receiving control, charging control, and QoS control in a core network in a mobile communication system.

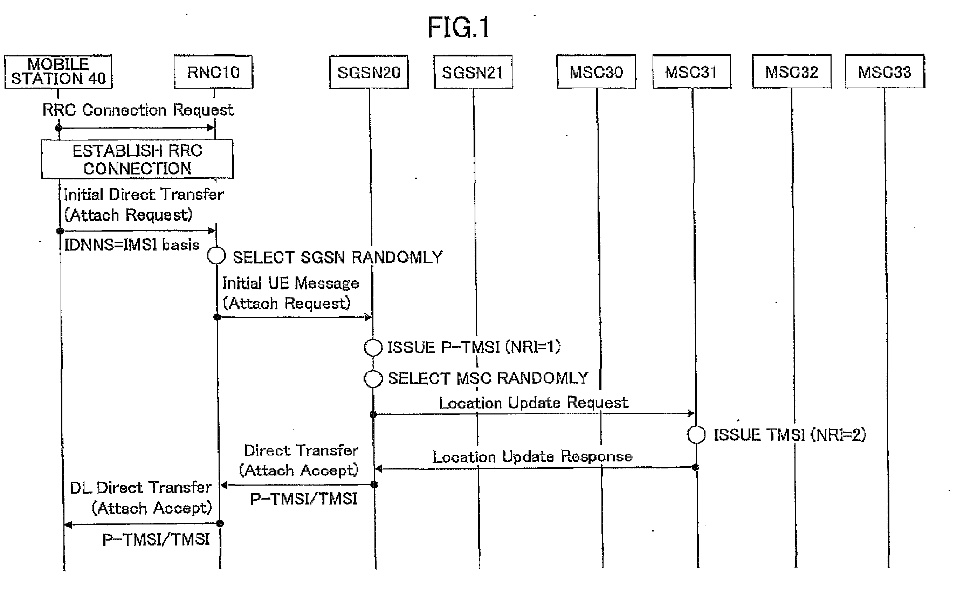

FIG. 1 illustrates a typical sequence when a mobile station 40 performs attach in an Iu-Flex network. An RNC 10 is connected with two packet switching devices SGSNs 20 and 21 and four circuit switching devices MSCs 30 through 33 as upper-level devices of the RNC 10.

Further, the mobile station 40 is located as the lower-level device of the RNC 10. Though it is not described in the figures for simplification purposes, the mobile station 40 performs radio communication with a radio base station, and one or more radio base stations are connected with the RNC 10. As the mobile station 40, any appropriate user terminal allowing a user to perform radio communications may be used. For example, the user terminal may be a cellular phone, an information terminal, a smart phone, a personal digital assistant, a portable personal computer or the like. However, the mobile station 40 is not limited to any of those user terminals. Further, the number of the switching devices connected with the RNC 10 illustrated herein is an example only. Any other appropriate number of switching devices may be connected with the RNC 10.

When the mobile station 40 performs attach, first, it is necessary to establish the RRC connection between the mobile station 40 and the RNC 10. To that end, the mobile station 40 transmits the RRC Connection Request message to request the establishment of the RRC connection. Then, the RNC 10 transmits a message to direct the establishment of the RRC connection to the mobile station 40. This message may be called "RRC CONNECTION SETUP".

After the RRC connection is established, the mobile station 40 transmits the attach request signal (Attach Request) to the RNC 10 (Initial Direct Transfer). In this transmission, an information element called IDNNS (Intra Domain NAS Node Selector) is set in the attach request signal. The IDNNS includes bit string information having 10 bits generated by using any of TMSI, P-TMSI, IMSI, and IMEI which are identification information to identify the mobile station 40 in the network. The IDNNS further includes information indicating which of the TMSI, the P-TMSI, the IMSI, and the IMEI is used as the basis of the bit string information having 10 bits. The bit string information having 10 bits may also be called a "Routing Parameter". Among those identifiers (identification information), priority to be used may be given in the order of TMSI, P-TMSI, and IMSI and IMEI. Typically, the TMSI and the P-TMSI are identifiers (IDs) that a switching device issues (generates), and the IMSI and the IMEI are identifiers (ID) that are uniquely set to the subscribers and the terminals in advance. More specifically, the TMSI (temporary Mobile Subscriber Identifier) is the identifier issued by the circuit switching device in the Circuit Switched domain. On the other hand, the P-TMSI (Packet TMSI) is the identifier issued by the switching device in the Packet Switched domain. The IMSI (International Mobile Subscriber Identifier) is the subscriber identifier uniquely assigned to the user. The IMEI (International Mobile Equipment Identifier) is the terminal identifier uniquely assigned to the terminal such as a user terminal. In case of attach, neither TMSI nor P-TMSI has been issued. Therefore, the usable identifiers are the IMSI or the IMEI. In the case of FIG. 1, the IMSI is set in the IDNNS in the attach request signal.

In response to the attach request signal (i.e., call from the mobile station), the RNC 10 determines (selects) the Serving CN. The Routing Parameter set in the attach request signal is set in the INSI. In the case of attach, the switching device to be connected is not determined. Therefore, the RNC 10 randomly selects an arbitrary core node. The attach procedure is typically performed in the PS domain. Therefore, in the example of FIG. 1, the RNC 10 selects the SGSN 20, and transmits the attach request signal (Attach Request) received from the mobile station 40 to the SGSN 20 (Initial UE Message). It may not be essential that the attach is performed in the Packet Switched domain. Namely, from a technical point of view, the attach may alternatively be performed in the Circuit Switched domain.

In response to the received attach request signal, the SGSN 20 not only generates the subscriber profile of the mobile station initiating the call but also issues the P-TMSI. The NRI (PS-NRI) of the SGSN 20 is embedded into the P-TMSI. Specifically, the NRI of the SGSN 20 is included (embedded) as 10-bit data as the 14th to the 23rd bit data of the P-TMSI. For example, when the decimal values of the NRI of SGSNs 20 and 21 are 1 and 2, respectively, the information indicating NRI=1 ("01" in binary) is included in the P-TMSI issued by the SGSN 20.

Next, to perform attach to the CS Domain, the SGSN 20 selects one MSC from among plural switching devices MSC 30 through 33. In the selection, the SGSN 20 selects the MSC that can adequately (correctly) communicate with the SGSN 20. In this case, whether the communication can be adequately performed is determined based on (the results of) the health check having been detected in advance. In the example of FIG, 1, no subscribe profile for the mobile station is generated in any of the switching devices MSCs (i.e., no Servicing MSC has been determined). Therefore, an arbitrary MSC in communication may be randomly selected. In the example of FIG. 1, the MSC 31 is selected, and the attach request signal to the CS domain is transmitted to the MSC 31 (Location Update Request).

The MSC 31 not only generates the subscriber profile of the mobile station 40 initiating the call but also issues the TMSI. The NRI (CS-NRI) of the MSC 31 is embedded into the TMSI. Specifically, the NRI of the MSC 31 is included (embedded) as 10-bit data of the 14th to the 23rd bit data in the TMSI. For example, when the decimal values of the NRI of MSCs 30 through 33 are 1 though 4, respectively, the information indicating NRI=2 ("10" in binary) is included in the TMSI issued by MSC 31.

The issued TMSI is reported from the MSC 31 to the SGSN 20 (Location Update Response).

The SGSN 20 reports the generated P-TMSI and the received TMSI to the RNC10 (Direct Transfer) by the attach response signal (Attach Accept). The RNC 10 reports the attach response signal to the mobile station 40 (DL Direct Transfer).

By the attach procedure described above, the TMSI and the P-TMSI are issued.

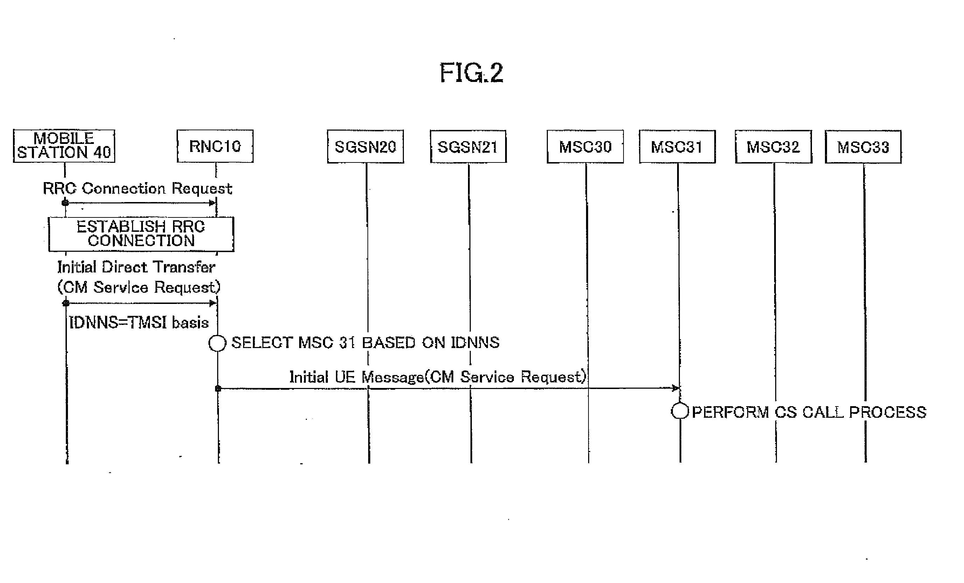

FIG. 2 illustrates a case where the mobile station 40 performs the CS call after performing the attach. For simplification purposes, FIG. 2 illustrates only the CS call. However, the mobile station may perform the PS call as well.

First, the mobile station 40 transmits a request to establish the RRC connection to the RNC 10 (RRC Connection Request). After the RNC connection is established, the mobile station 40 reports the CS call request signal (CM SERVICE REQUEST) to the RNC 10 (Initial Direct Transfer). The CS call request signal includes the Routing Parameter (IDNNS). When generating the Routing Parameter based on the TMSI or the P-TMSI, the mobile station 40 extracts 10 bit data from the 14th to the 23rd bit data of the TMSI or the P-TMSI and sets the extracted 10 bit data as the Routing Parameter. As described above, the extracted 10 bit data includes the NRI of the switching device to be connected. In this case, the CS call is performed. Therefore, the IDNNS is set (included) in the TMSI, and the NRI (i.e., NRI=2₁₀=10₂) of the MSC31 is included in the TMSI.

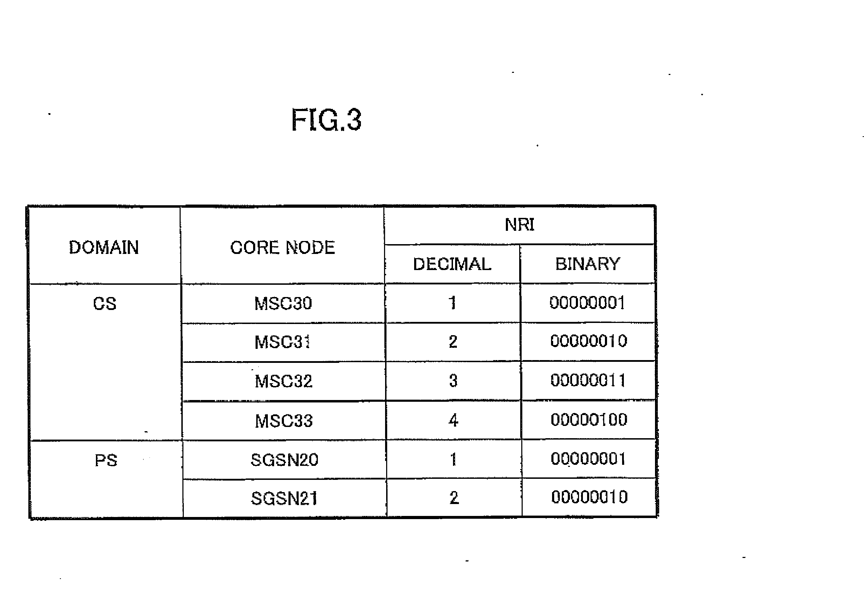

Upon receiving the CS call request signal, the RNC 10 refers to the IDNNS to determine the MSC to be connected. The IDNNS is provided as 10 bit data in the 14th to the 23rd bit data of the TMSI. The RNC 10 stores this Routing Parameter ("10"). The RNC 10 stores the relationships (data) between the switching devices and the NRI (FIG. 3). The RNC 10 refers to the relationships, and designates (selects) the MSC 31 as the Serving CN, the MSC 31 corresponding to the NRI set in the IDNNS. The RNC 10 transmits the CS call request signal to the designated MSC 31 (Initial UE Message). Then, the CS call connection procedure is performed in the MSC 31.

As described above, in the Iu-Flex method, plural switching devices may exist, and by selecting an appropriate switching device, it may become possible to improve the workload distribution and the fault tolerance.

Next, details of a problem in the Iu-Flex method in the related art are described.

When the SGSN performing the attach selects the MSC, it is necessary to select the MSC that can adequately (correctly) communicate with the SGSN (i.e., the MSC having a normal health check condition between the SGSN and the MSC). To that end, the health check between the SGSN and the MSC is periodically performed, and the results of the health check are stored in the SGSN. By doing this, the SGSN may select the MSC other than the MSC having an abnormal (NG) health check condition. In the same manner, the health check between the RNC and the MSC is periodically performed, and the results of the health check are stored in the RNC. By doing this, the RNC may select the MSC other than the MSC having an abnormal (NG) health check condition. However, in the Iu-Flex method in the related art, the health check condition between the RNC and the MSC is not reported to the SGSN, and the SGSN does not manage the health check condition between the RNC and the MSC. Namely, the SGSN only manages the health check condition of the communication channels between the SGSN and the MSC. As a result, the following problem described below may occur.

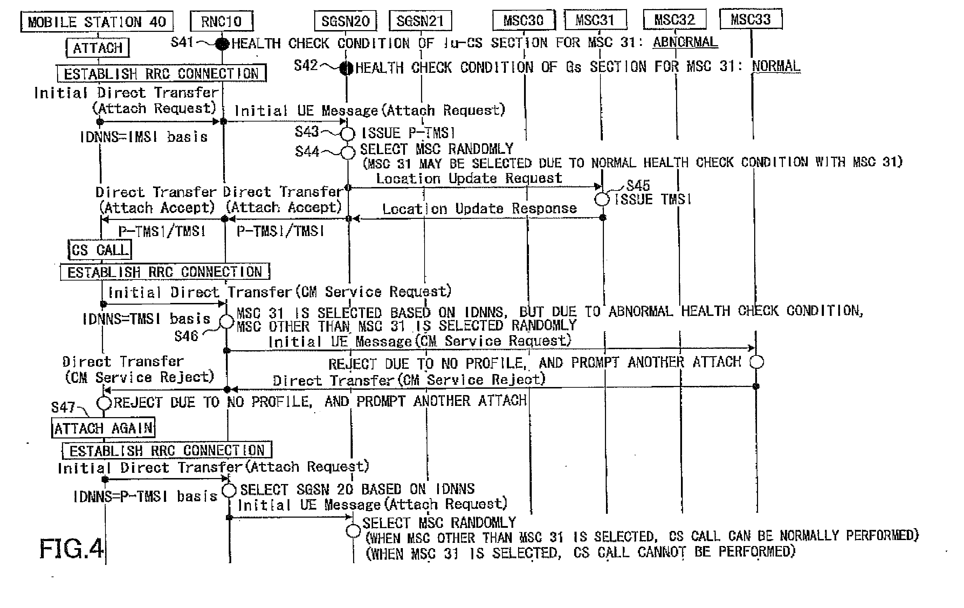

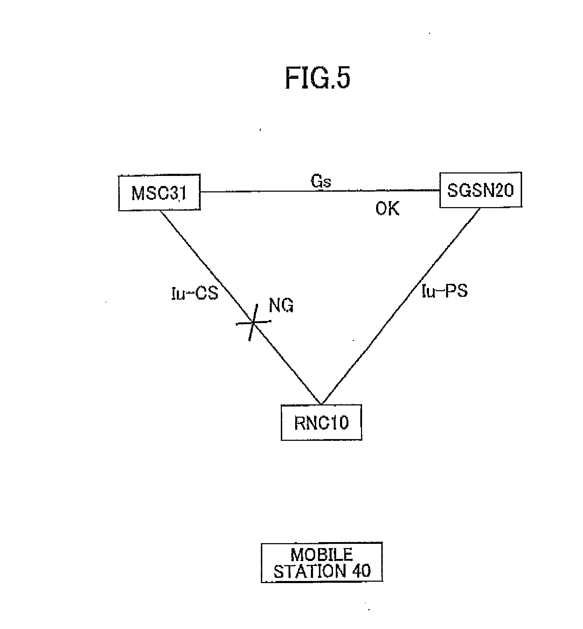

FIG. 4 is a sequence diagram illustrating the problem. FIG. 5 illustrates a node influenced by the problem. As illustrated using a black circle (●) of the RNC 10 in step S41 of FIG. 4, the RNC 10 performs the health check in the Iu-CS sections to determine whether communication can be correctly (adequately, normally) performed with the respective MSCs. For explanatory purposes, in this example, it is detected that the RNC 10 can correctly communicate with the MSC 30 (between RNC 10 and MSC 30), the RNC 10 cannot correctly communicate with the MSC 31 (between RNC 10 and MSC 31), and the RNC 10 can correctly communicate with the MSCs 32 and MSC 33 (between RNC 10 and MSC 32 and between RNC 10 and MSC 33). Further, as illustrated using the black circle (●) of the SGSN 20 in step S42 of FIG. 4, the SGSN 20 performs the health check in the Gs sections to determine whether communication can be correctly performed with the respective MSCs. For explanatory purposes, in this example, it is detected that the SGSN 20 can correctly communicate with any of the MSCs 30 through 33 (between SGSN 20 and each of the MSCs 30 through 33). In this case, when viewed from the MSC 31, as illustrated in FIG. 5, the health check condition between the RNC 10 and the MSC 31 is abnormal (NG) (i.e., not available in communication) while the health check condition between the SGSN 20 and the MSC 31 is normal (OK) (i.e., available in communication).

As described with reference to FIG. 1, when the attach is performed, the SGSN 20 issues the P-TMSI and selects the MSC (steps S43 and S44). In this case, the MSC having a normal (OK) health check condition between the SGSN 20 and the MSC is selected. As a result, it is assumed that the SGSN 20 selects the MSC 31. In the related art, the SGSN 20 selects the MSC only based on the health check condition in the Gs section. Therefore, in this example, the SGSN 20 may select any of the MSCs 30 through 33. The SGSN 20 transmits the attach request signal (Location Update Request) to the MSC 31, and the MSC 31 issues the TMSI (NRI=2) and generates the subscriber profile or the mobile station transmitting the attach request signal for preparing subsequent CS call (step S45).

Then, when the mobile station transmits the CS call request signal (CS Service Request) along with the TMSI where NRI=2, the RNC 10 analyzes the CS call request signal and determines that the mobile station designates the MSC 31 where NRI=2 as the forwarding destination. However, since communication cannot be correctly performed between the RNC 10 and the MSC 31, the RNC 10 selects the MSC other than MSC 31 and having a normal (OK) health check condition (e.g., MSC 33) and transmits the CS call request signal. The MSC 33 informs the RNC 10 that the attach process be performed since the MSC 33 does not have the subscriber profile of the mobile station. As a result, the RNC 10 informs the mobile station that the RNC 10 cannot respond to the CS call request (CS Service Reject).

The SGSN 20 having received the attach request signal (INITIAL UE MESSAGE) (Attach Request) due to the next attach (step S47) selects the MSC again. In this case, the SGSN 20 selects the MSC based on the health check conditions between the SGSN 20 and the respective MSCs. Therefore, when the SGSN 20 selects the MSC other than MSC 31, the SGSN 20 may correctly perform the subsequent CS call process. However, when the SGSN 20 selects the MSC 31 again, the SGSN 20 may not correctly complete the subsequent CS call process because of an abnormal (NG) health check condition between the RNC 10 and the MSC 31.

The embodiment may effectively resolve the above problem.

### 2. RNC

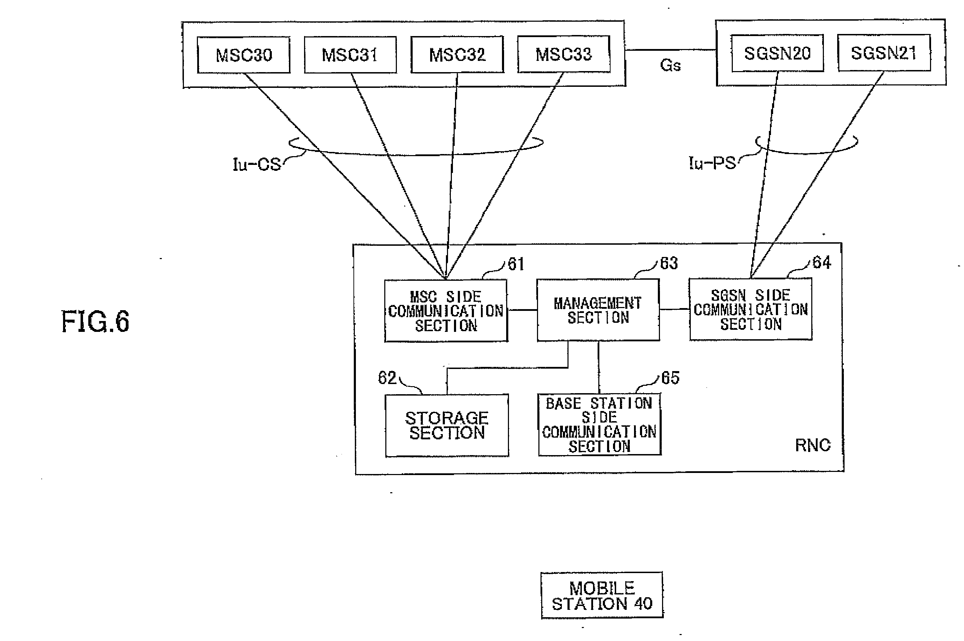

FIG. 6 is a block diagram of the RNC (Radio Network Control device) according to an embodiment. This RNC may be used as the RNC 10. As illustrated in FIG. 6, the RNC 10 includes an MSC side communication section 61, a storage section 62, a management section 63, an SGSN side communications section 64, and a base station side communication section 65. For explanatory purposes, FIG. 6 may illustrates only elements relevant to the functions of the embodiment from among the various elements of the RNC 10.

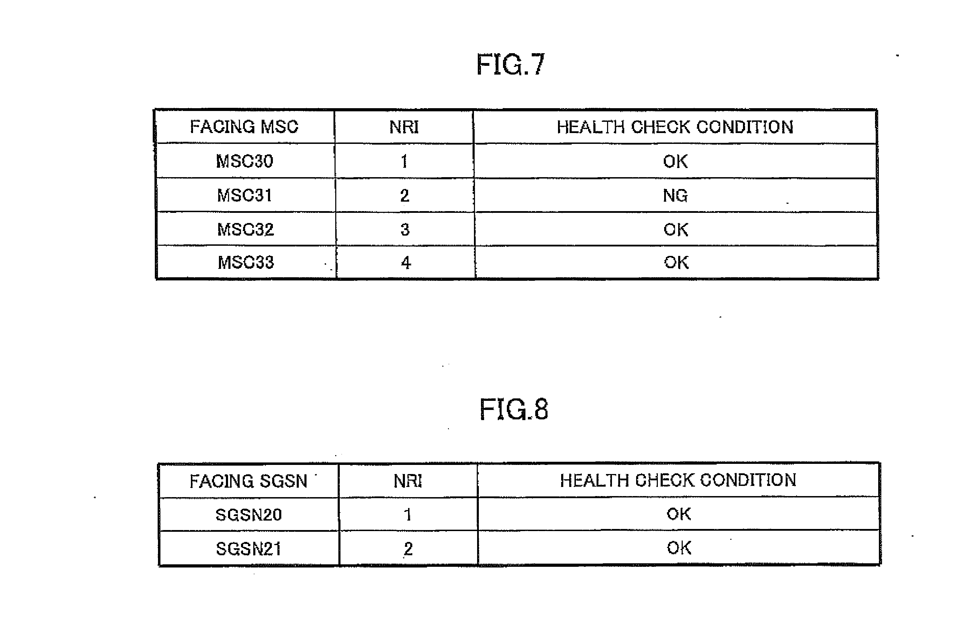

The MSC side communication section 61 is connected with a plurality of circuit switching devices MSCs 30 through 33 in the Circuit Switched domain via the communication interface Iu-CS so as to communicate with the plural circuit switching devices MSCs 30 through 33. In the example of FIG. 6, the MSC side communication section 61 is connected with four circuit switching devices. However, the MSC side communication section 61 may be connected with arbitrary number of circuit switching devices. The MSC side communication section 61 periodically or irregularly (e.g., when necessary) performs health checks to determine (detect) whether communications can be correctly performed in the Iu-CS section. To that end, the MSC side communication section 61 transmits a health check signal to all of the circuit switching devices MSCs 30 through 33, and waits for the response signals from the circuit switching devices MSCs, 30 through 33. When an appropriate response signal can be received from a circuit switching device, it is determined that the communication channel with the switching device is in normal (OK) condition. On the other hand, when no appropriate response signal is received within a predetermined time period from a switching device or when the contents of the received response signal is not appropriate, it is determined that the communication channel with the switching device is not normal (NG, abnormal). The health check conditions indicating whether communications can be correctly performed are stored in the storage section 62 in each of the circuit switching devices MSCs 30-33 as illustrated in FIG. 7. The example of FIG. 7 illustrates a case where it is detected that communications with the MSCs 30, 32, and 33 are normal (correct), but the communications with the MSC 31 is not normal (abnormal).

The management section 63 manages the health check conditions of the MSCs. Further, when there exists an MSC having an abnormal (not normal) health check condition, the management sections 63 selects the MSC having a normal communication channel (health check condition) as the connecting destination for forwarding the CS call request signal, the attach request signal and the like from the mobile station. The selection may be made randomly or based on the round-robin method. The management section 63 controls the SGSN side communication section 64 so that the SGSN side communication section 64 reports the health check conditions between the RNC 10 and the respective MSCs to the packet switching device SGSN 20 at any appropriate timing. To that end, for example, when the RNC 10 transmits the health check signal of the Iu-PS section to the packet switching device SGSN 20, the health check conditions of the Iu-CS section may also be reported to the packet switching device SGSN 20. Otherwise, when the RNC 10 transmits the attach request signal from the mobile station to the SGSN 20, the health check conditions of the Iu-Cs section may also be reported to the packet switching devices SGSN 20. Further, in addition to a case where the RNC 10 reports the health check conditions of the Iu-PS section to the packet switching device SGSN 20, when the RNC 10 transmits the attach request signal from the mobile station to the SGSN 20, the health check conditions of the Iu-CS section may also be reported to the packet switching device SGSN 20.

The SGSN side communication section 64 is connected with the packet switching devices SGSNs 20 and 21 in the Packet Switched domain via the communications interface Iu-PS so as to communicate with the packet switching devices SGSNs 20 and 21. In the example of FIG. 6, the SGSN side communication section 64 is connected with two packet switching devices. However, the SGSN side communication section 64 may be connected with an arbitrary number of packet switching devices. The SGSN side communication section 64 periodically or irregularly (e.g., when necessary) performs health checks to determine (detect) whether communications can be correctly performed in the Iu-PS section. To that end, the SGSN side communications section 64 transmits a health check signal to all of the packet switching devices SGSNs 20 and 21, and waits for the response signals from the packet switching devices SGSN 20 and 21. When an appropriate response signal can be received from a circuit switching device, it is determined that the communication channel with the switching device is in normal (OK) condition. On the other hand, when no appropriate response signal is received within a predetermined time period from a switching device or when the content of the received response signal is not appropriate, it is determined that the communications channel with the switching device is not normal (NG, abnormal). The health check conditions indicating whether communications can be correctly performed are stored in the storage section 62 in each of the packet switching devices SGSNs 20 and 21 as illustrated in FIG. 8. The example of FIG. 8 illustrates a case where it is detected that communications with any of the SGSNs 20 and 21 are normal.

Based on the instructions from the management section 63, the SGSN side communication section 64 reports the information of the health check stored in, the storage section 62 to the SGSN 20. To that end, for example, when the health check conditions of the Iu-PS section are reported to the SGSN 20, the health check conditions of the Iu-CS section may also be reported to the SGSN 20. Otherwise, when the RNC 10 transmits the attach request signal from the mobile station to the SGSN 20, the health check conditions of the Iu-CS section may also be reported to the SGSN 20. Further, in addition to the case where the RNC 10 reports the health check signals of the Iu-PS section to the SGSN 20, when the RNC 10 transmits the attach request signal to the SGSN 20, the health check conditions of the Iu-Cs section may also be reported to the SGSN 20.

The base station side communication section 65 is connected to one or more base stations, and communicates with the base stations. For example, the base station side communication section 65 receives the attach request signal, the PS call request signal, and the CS call request signal from the mobile station via the base station (not shown), and transmits the signals to the packet switching devices and the circuit switching devices.

### 3. MSC

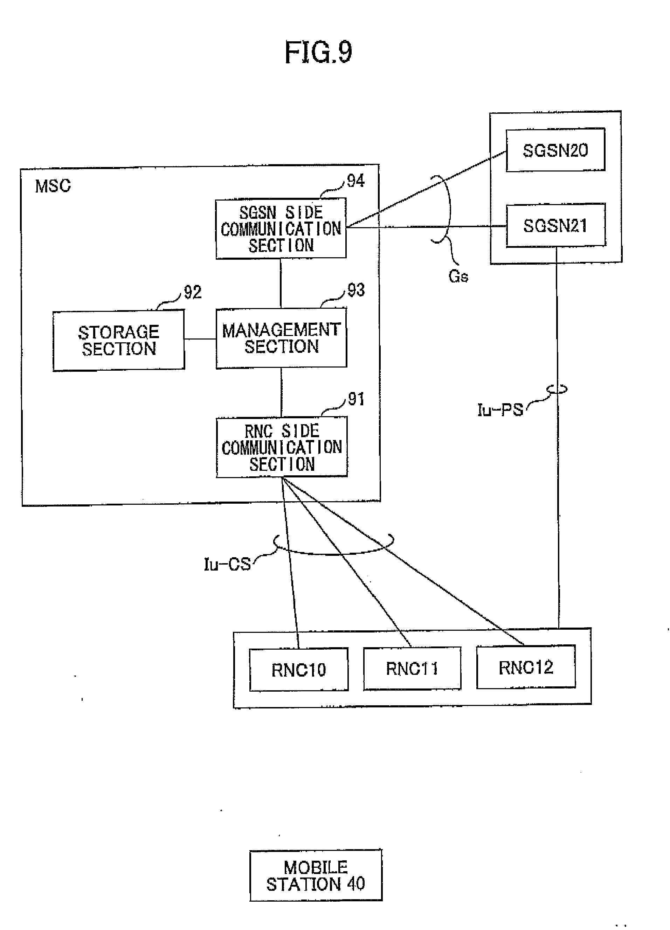

FIG. 9 is a block diagram of the circuit switching device (MSC) according to an embodiment. This MSC may be used as any of the MSCs 30 through 33 in the Circuit Switched domain. As illustrated in FIG. 9, the MSC includes an RNC side communication section 91, a storage section 92, a management section 93, and an SGSN side communication section 94. For explanatory purposes, FIG. 9 illustrates only elements relevant to the functions of the embodiment from among the various elements of the circuit switching device.

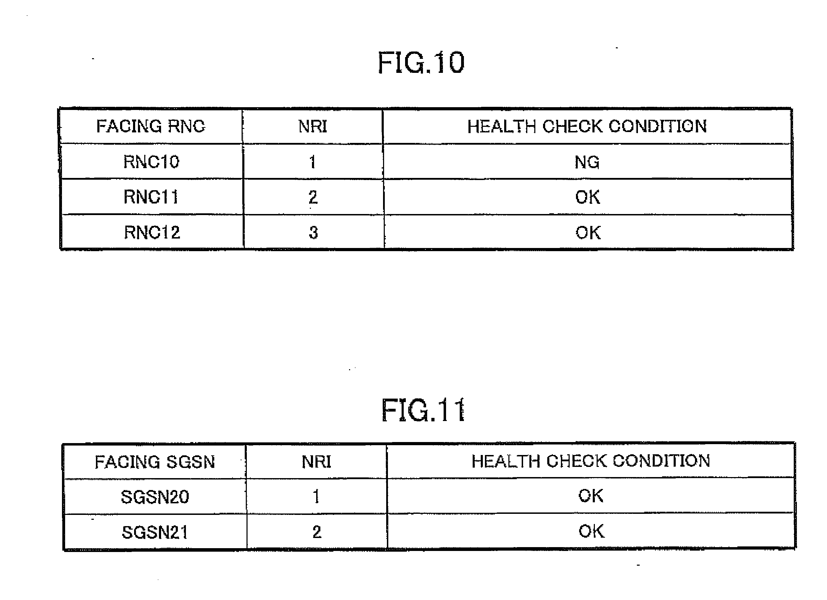

The RNC side communication section 91 is connected with the of RNCs 10 through 12 via the interface Iu-CS on the circuit switching network so as to communicate with the RNCs 10 through 12. In the example of FIG. 9, the RNC side communication section 91 is connected with three RNCs. However, the RNC side communication section 91 may be connected with arbitrary number of the RNCs. The RNC side communication section 91 may periodically or irregularly (e.g., when necessary) perform health checks to determine (detect) whether communications can be correctly performed in the Iu-CS section. The health check conditions indicating whether communications can be correctly performed are stored in the storage section 92 in each of RNCs 10 through 12 as illustrated in FIG. 10. The example of FIG. 10 illustrates a case where it is detected that communications with the RNCs 11 and 12 are normal (correct), but the communications with the RNC 10 are not normal (abnormal).

The management section 93 controls the SGSN side communication section 94 so that the SGSN side communication section 94 reports the health check conditions of the Iu-CS section to the packet switching devices at any appropriate timing. To that end, for example, when the MSC transmits the health check signals of the Gs sections to the packet switching device, the health check conditions of the Iu-CS section may also he reported to the packet switching device SGSN.

The SGSN side communication section 94 is connected with the packet switching devices SGSNs 20 and 21 in the Packet Switched domain via the communication interface Gs so as to communicate with the packet switching devices SGSNs 20 and 21. In the example of FIG. 9, the SGSN side communication section 94 is connected with two packet switching devices. However, the SGSN side communication section 94 may be connected with an arbitrary number of packet switching devices. The SGSN. side communication section 94 periodically or irregularly (i.e., when necessary) may perform health checks to determine (detect) whether communications can be correctly performed in the Gs section. The health check conditions indicating whether communications can be correctly performed are stored in the storage section 92 in each of the circuit switching devices SGSNs 20 and 21 as illustrated in FIG. 11. The example of FIG. 11 illustrates a case where it is detected that communications with the SGSNs 20 and 21 are normal.

Based on the instructions from the management section 93, the SGSN side communication section 94 reports the information of the health checks stored in the storage section 92 to the SGSNs. To that end, for example, when the health check conditions of the Gs section are reported to the SGSNs by the MSC, the health check conditions of the Iu-CS section may also be reported to the SGSNs.

### 4. SGSN

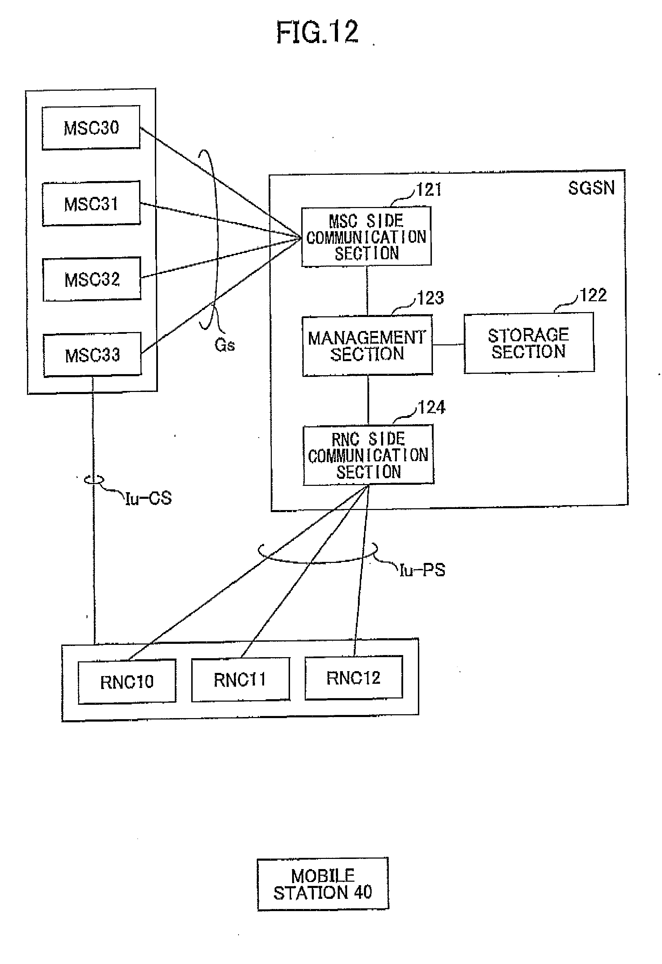

FIG. 12 is a block diagram of the packet switching device (SGSN) according to an embodiment. This SGSN may be used as any of the SGSNs 20 and 21. As illustrated in FIG. 12, the SGSN includes an MSC side communication section 121, a storage section 122, a management section 123, and an RNC side communication section 124. For explanatory purposes, FIG. 12 illustrates only elements relevant to the functions of the embodiment from among the various elements of the SGSN.

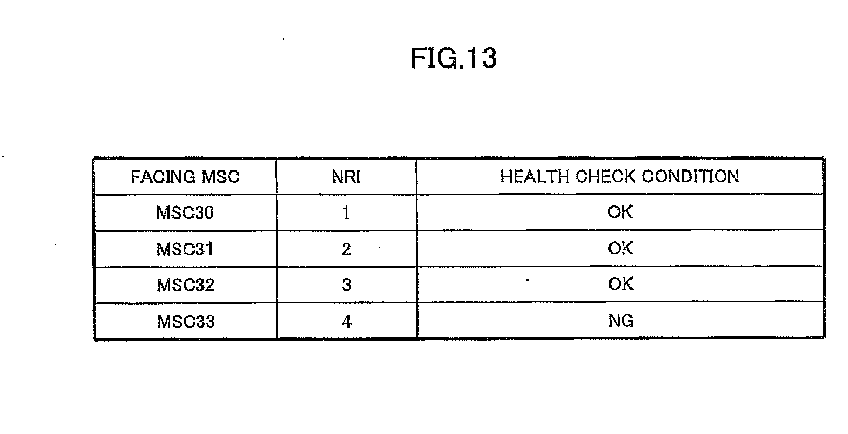

The MSC side communication section 121 is connected with the MSCs 30 through 33 in the Circuit Switched domain via the interface Gs so as to communicate with the MSCs 30 through 33. In the example of FIG. 12, the MSC side communication section 121 is connected with four circuit switching devices. However, the MSC side communication section 121 may be connected with an arbitrary number of the circuit switching devices. The MSC side communication section 121 may or may not perform the health checks to determine (detect) whether communications can be correctly performed in the Gs section. When the MSC side communication section 121 does not perform the health checks, the MSC side communication section 121 receives the health check conditions of the Gs section from the circuit switching devices MSCs 30 through 33, and stores the received health check conditions in the storage section 122. On the other hand, when the MSC side communication section 121 performs the health checks, the MSC side communication section 121 stores the health check conditions as the results of performing the health checks into the storage section 122. The health check conditions indicating whether communications can be correctly performed are stored in the storage section 122 in each of the circuit switching devices MSCs 30 through 33 as illustrated in FIG. 13. The example of FIG. 13 illustrates a case where it is detected that communications with the circuit switching devices MSCs 30 though 32 are normal (correct), but the communications with the MSC 33 is not normal (abnormal).

The management section 123 manages the health check conditions, and selects any one of the normal MSCs other than the MSC having an abnormal communication channel. The selection may be made randomly or based on the round-robin method.

The RNC side communication section 124 is connected with plural RNCs 10 through 12 via the communication interface Iu-PS so as to communicate with the RNCs 10 through 12. In the example of FIG. 12, the RNC side communication section 124 is connected with three RNCs. However, the RNC side communication section 124 may be connected with an arbitrary number of the RNCs. The RNC side communication section 124 may or may not perform the health checks to determine (detect) whether communications can be correctly performed in the Iu-PS section. When the RNC side communication section 124 does not perform the health checks, the RNC side communication section 124 receives the health check conditions of the Iu-PS section from the RNCs 10 through 12, and stores the received health check conditions in the storage section 122. On the other hand, when the RNC side communication section 124 performs the health checks, the RNC side communication section 124 stores the health check conditions in the storage section 122 for each of the RNCs 10 though 12. The health check conditions may be managed for each of the switching devices as illustrated in FIG. 13, or may be managed based on the combinations of the MSCs and the RNCs. In any case, unlike the related art, the SGSN according to an embodiment stores not only the health check conditions of the Gs section but also the health check conditions of the Iu-CS section in the storage section 122, and comprehensively manages those health check conditions.

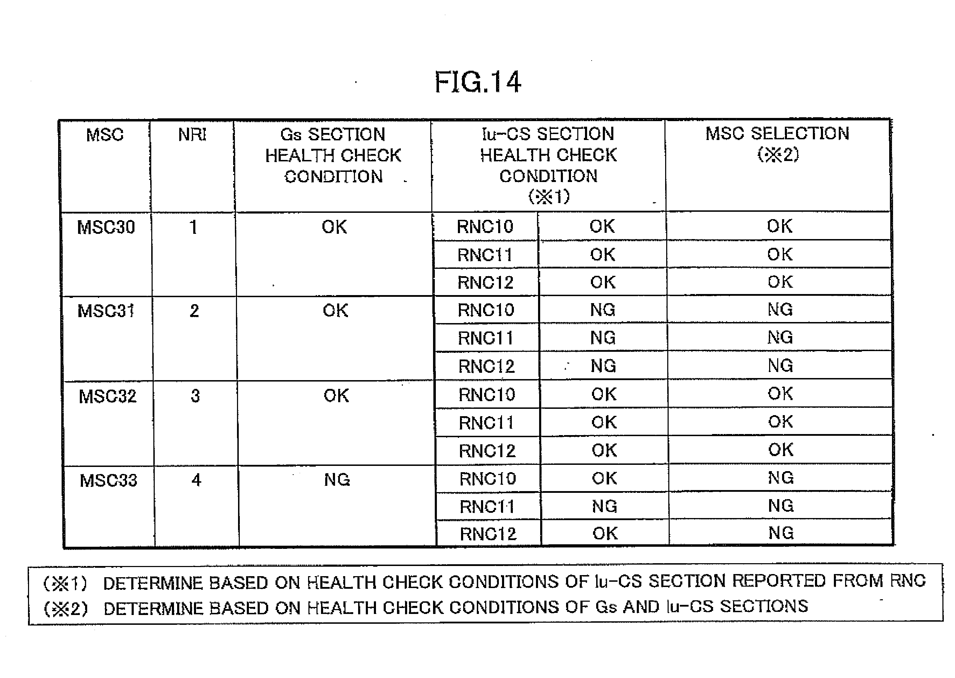

FIG. 14 illustrates the health check information comprehensively managed by the combinations of the MSCs and the RNCs. In this example of FIG. 14, communications between the SGSN and the MSCs 30 through 32 are normal (correct), but the communications between the SGSN and the MSC 33 are not normal (abnormal). Further, the storage section 122 of the SGSN also manages the health check information of the Iu-CS section. The communications between the MSC 30 and the RNCs 10 through 12 are normal (correct). The communications between the MSC 31 and the RNCs 10 through 12 are not normal (abnormal). The communications between the MSC 32 and the RNCs 10 through 12 are normal (correct). The communications between the MSC 33 and each of the RNCs 10 and RNC 12 are normal, but the communications between the MSC 33 and the RNC 11 are not normal. As described above, the management section 123 of the SGSN comprehensively manages not only the health check conditions of the Gs section but also the health check conditions of the Iu-CS section, selects the MSC based on the combination in which the health check conditions are normal in each of the Gs and the Iu-CS sections, and connects with the selected MSC. In this regard, the above configuration according to an embodiment entirely differs from the related art in which the MSC is selected only based on the health condition of the Gs section. When the method of the related art is used, in the above example, since only the health check conditions of the Gs section are considered, any of the MSCs 30 through to 32 excluding MSC 33 is selected. Namely, there may be a concern that the MSC 31 having an abnormal health check condition in the Iu-CS section is selected. On the other hand, according an embodiment, the MSC 30 or the MSC 32 having a normal health check conditions of the Iu-CS section and the Gs section is selected as the connecting destination of the CS call and the like. Therefore, according to an embodiment, it may become possible to select an appropriate MSC as the connecting destination of the CS call and the like based on not only the health check condition of the Gs section but also the health check condition of the Iu-CS section.

### 5. Operation Example

In the following, operation examples are described. As described above, the SGSN selects an appropriate MSC as the connecting destination based on the consideration of not only the health check conditions of the Gs section but also the health check conditions of the Iu-CS section. To that end, it is necessary for the SGSN to acquire not only the information of the health check conditions of the Gs section but also the information of the health check conditions of the Iu-CS section. The SGSN may acquire the information of the health check conditions of the Gs section from the MSC at the timing of the health check or at any other timing. Otherwise, the SGSN may perform the health check of the Gs section by themselves and stores the information of the health check. On the other hand, the SGSN may acquire the information of the health check condition of the Iu-CS section at any of the following several possible timings. As the several possible timings, three timings (options) are herein described. However, it should be noted that it is not always necessary for the SGSN to acquire the information of the health check condition of the Iu-CS section at each of the three timings described below. Namely, it may be sufficient for the SGSN to acquire the information of the health check condition of the Iu-CS section at least at one of the three timings described below. Further, it may be preferable when the SGSN acquires the information of the health check condition of the Iu-CS section at two or more timings described below to so as to improve the redundancy.

In the following, operations in each of the timings (options) are sequentially described.

### 5.1 RNC reports SGSN upon health check

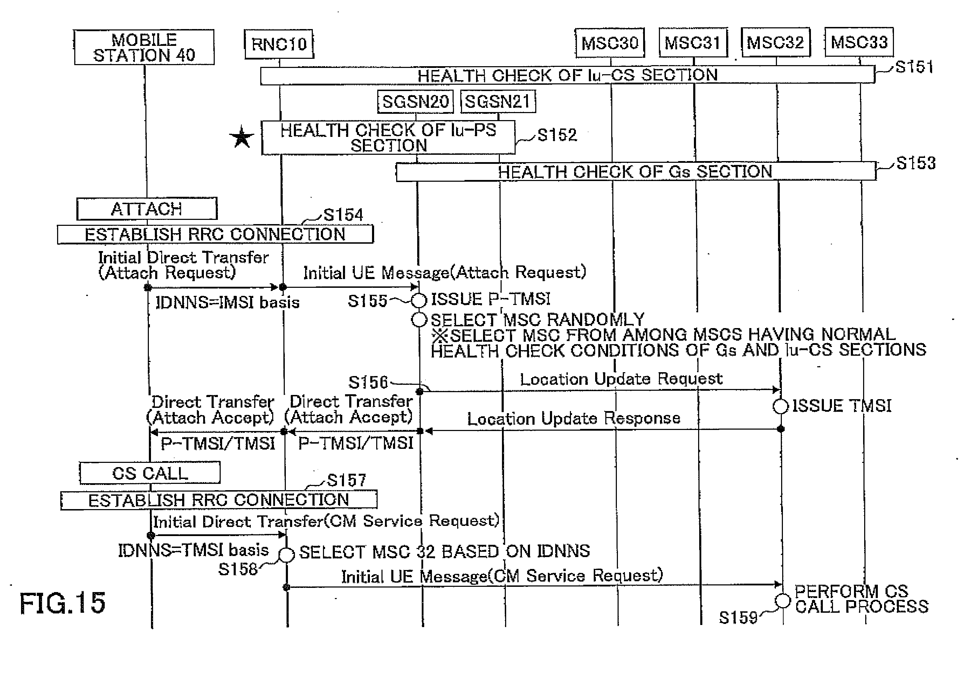

FIG. 15 is a sequence diagram illustrating an example operation in which the RNC reports the health check conditions of the Iu-CS section when transmitting the health check signal of the Iu-PS section to the SGSN.

In step S151, the health check of the Iu-CS section is performed by the RNC 10 and each of the MSCs 30 through 33. In the health check, for example, the RNC 10 may transmit the health check signal to each of the MSCs 30 through 33, and wait for the respective response signals from the MSCs 30 through 33. Then, the RNC 10 may determine whether each of the communication channels (between the RNC 10 and each of the MSCs 30 through 33) is normal or abnormal depending on whether appropriate response signal is received. In this case, the health check signal may be transmitted from the RNC or may be transmitted from each of the MSCs. In any case, the information of the health check conditions is stored in at least the RNC 10 for each combination between the MSC and the RNC of the Iu-CS section (or may be stored in each MSC).

In step S152, the health check of the Iu-PS section is performed by the RNC 10 and the SGSNs 20 and 21. In the health check, for example, the RNC 10 may transmit the health check signal to the SGSNs 20 and 21, and wait for the respective response signals from the SGSNs 20 and 21. Then, the RNC 10 may determine whether each of the communication chapels (between the RNC 10 and each of the SGSNs 20 and 21) are normal or abnormal depending on whether an appropriate response signal is received. In this case, the health check signal may be transmitted from the RNC or may be transmitted from the SGSNs. In any case, the information of the health check conditions is stored in at least the RNC 10 for each combination between the SGSN and the RNC in the Iu-PS section (or may be stored in the SGSN). When the RNC 10 transmits the health check signal of the Iu-PS section to the SGSN, the RNC 10 reports the health check information of the Iu-CS section, to the SGSN. To that end, for example, the message to be transmitted to the SGSN may include both the health check signal of the Iu-PS section and the health check information of the Iu-CS section. By doing this, it may become possible for the SGSN to comprehensively manage the health check information of both the Gs section and the Iu-CS section (FIG. 14).

In step S153, the health check of the Gs section is performed by the SGSNs 20 and 21 and the MSCs 30 through 33. In the health check, for example, the SGSN may transmit the health check signal to each of the MSCs 30 through 33, and wait for the respective response signals from the MSCs 30 through 33. Then, the SGSN may determine whether each of the communication channels (between the SGSN and each of the MSCs 30 through 33) are normal or abnormal depending on whether appropriate response signal is received. In this case, the health check signal may be transmitted from the SGSN or may be transmitted from the MSC. In any case, the information of the health check conditions is stored in at least the SGSN for each combination between the SGSN and the MSC of the Gs section (or may be stored in each MSC).

The health checks of the Iu-CS sections, the Iu-PS section, and the Gs section are periodically or irregularly (e.g., when necessary) performed.

In step S154, to transmit the attach request signal to the RNC 10, the mobile station transmits the RRC connection request (not shown), and the RRC connection is established. After that, the mobile station transmits the attach request signal (Attach Request) to the RNC 10. As the IDNNS in this case, since the TMSI and the P-TMSI are not issued, the IMSI is used. The RNC 10 selects the SGSN 20 having a normal health check in the Iu-CS section, and transmits the attach request signal to the SGSN 20.

In step S155, the SGSN 20 generates the subscriber profile of the mobile station, and issues the P-TMSI. Further, the SGSN 20 selects one MSC for preparing the CS call. This selection is performed based on not only the health check conditions of the Gs section but also the health check conditions of the Iu-CS section. Namely, the MSC having both the normal health check condition of the Gs section and the normal health check condition of the Iu-CS section is selected. For explanatory purposes, it is assumed that the MSC 32 is selected.

In step S156, the SGSN 20 transmits the attach request signal to the selected MSC 32 (Location Update Request). In response, the MSC 32 generates the subscriber profile of the mobile station transmitting the attach request signal, issues the TMSI, and transmits the issued TMSI to the SGSN 20. The SGSN 20 transmits the issued P-TMSI and the received TMSI to the mobile station. By doing this, the attach is completed.

In step S157, the mobile station transmits the RRC connection request (not shown) to perform the CS call, and the RRC connection is established. After that, the mobile station transmits the CS call request signal (CM Service Request) to the RNC 10. As the IDNNS in this case, the reported TMSI is used.

In step S158, the RNC 10 selects the MSC 32 as the connecting destination, based on the analysis result of the TMSI of the IDNNS. In this example operation, the MSC 32'having normal communication channels of the Gs and Iu-CS sections is selected. Therefore, the CS call request signal is transmitted to the MSC 32.

In step S159, based on the generated subscriber profile, the MSC 32 processes the CS call request signal from the mobile station.

### 5.2 RNC reports SGSN upon attach

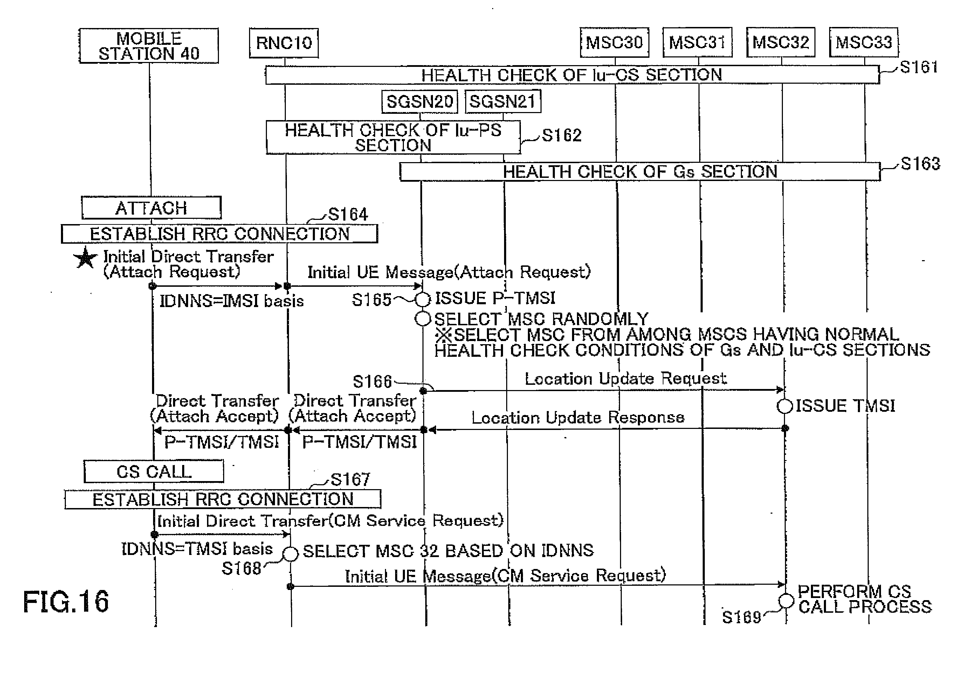

FIG. 16 is a sequence diagram illustrating an example operation in which the RNC reports the health check conditions of the Iu-CS section when performing the attach.

In step S161, similar to step S151, the health check of the Iu-CS section is performed by the RNC 10 and the MSCs 30 through 33. The information of the health check conditions is stored in at least the RNC 10 for each combination between the MSCs and the RNC of the Iu-CS section (or may be stored in each MSC).

In step S162, similar to step S152, the health check of the Iu-PS section is performed by the RNC 10 and the SGSNs 20 and 21. The information of the health check conditions is stored in at least the RNC 10 for each combination between the SGSNs and the RNC in the Iu-PS section (or may be stored in the SGSN).

In step S163, similar to step S153, the health check of the Gs section is performed by the SGSNs 20 and 21 and the MSCs 30 through 33. The information of the health check conditions is stored in at least the SGSN for each combination between the SGSNs and the MSCs of the Gs section (or may be stored in each MSC).

The health checks of the Iu-CS section, the Iu-PS section, and the Gs section are periodically or irregularly (i.e., when necessary) performed.

In step S164, to transmit the attach request signal to the RNC 10, the mobile station transmits the RRC connection request (not shown), and the RRC connection is established. After that, the mobile station transmits the attach request signal (Attach Request) to the RNC 10. As the IDNNS in this case, since the TMSI and the P-TMSI are not issued, the IMSI is used. The RNC 10 selects the SGSN 20 having a normal health check in the Iu-PS section, and transmits the attach request signal to the SGSN 20. In this example operation, the attach request signal not only indicates that the mobile station is going to attach but also includes the information of the health check of the Iu-CS section acquired in step S161. By doing this, the SGSN 20 having received the attach request signal may comprehensively manage both the health check information of the Gs section and the health check information of the Iu-CS section (FIG. 14).

In step S165, similar to step S155, the SGSN 20 generates the subscriber profile of the mobile station, and issues the P-TMSI. Further, the SGSN 20 selects one MSC for preparing the CS call. This selection is performed based on not only the health check conditions of the Gs section but also the health check conditions of the Iu-CS section. Namely, the MSC having both the normal health check conditions of the Gs section and the normal health check conditions of the Iu-CS section is selected. In this example operation, the health check information of the Iu-CS section is included in the received attach request signal. For explanatory purposes, it is assumed that the MSC 32 is selected.

In step S166, similar to step S156, the SGSN 20 transmits the attach request signal to the selected MSC 32 (Location Update Request). In response, the MSC 32 generates the subscriber profile of the mobile station transmitting the attach request signal, issues the TMSI, and transmits the issued TMSI to the SGSN 20. The SGSN 20 transmits the issued P-TMSI and the received TMSI to the mobile station. By doing this, the attach is completed.

In step S167, similar to step S157, the mobile station transmits the RRC connection request (not shown) to perform the CS call, and the RRC connection is established. After that, the mobile station transmits the CS call request signal (CM Service Request) to the RNC 10. As the IDNNS in this case, the reported TMSI is used.

In step S168, similar to step S158, the RNC 10 selects the MSC 32 as the connecting destination based on the analysis result of the TMSI of the IDNNS. In this example operation, the MSC 32 having normal communication channels of the Gs and Iu-CS sections is selected. Therefore, the CS call request signal is transmitted to the MSC 32.

In step S169, similar to step S159, based on the generated subscriber profile, the MSC 32 processes the CS call request signal from the mobile station.

### 5.3 MSC reports SGSN upon health check

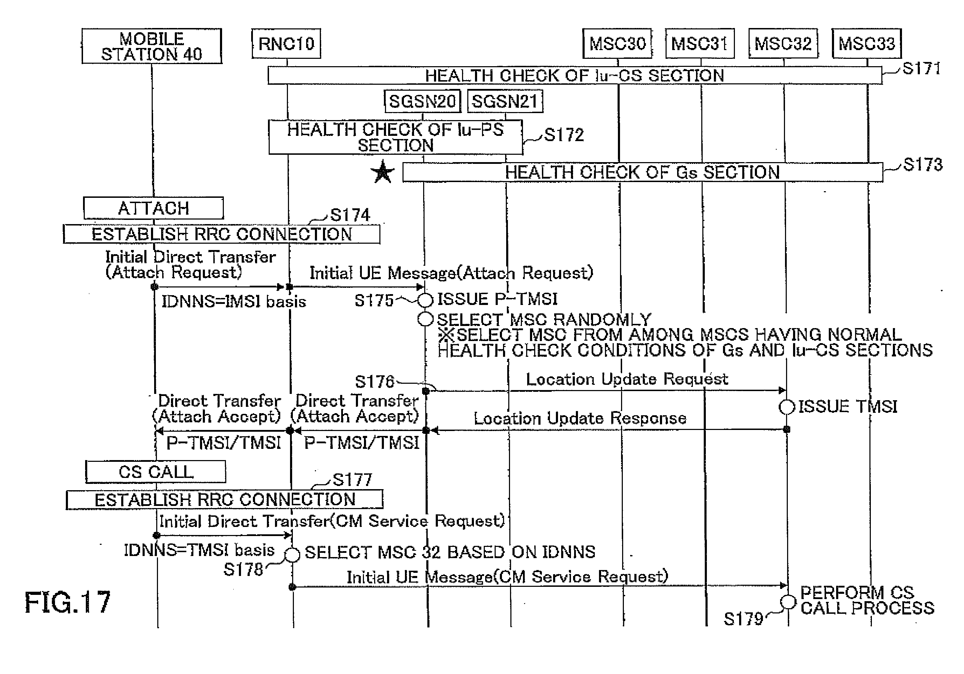

FIG. 17 is a sequence diagram illustrating an example operation in which the MSC reports the health check conditions of the Iu-CS section when reporting the health check conditions.

In step S171, similar to step S151, the health check of the Iu-CS section is performed by the RNC 10 and the MSCs 30 through 33. The information of the health check conditions is stored in at least each MSC for each combination between the MSCs and the RNC of the Iu-CS section (or may be stored in the RNC).

In step S172, similar to step S152, the health check of the Iu-PS section is performed by the RNC 10 and the SGSNs 20 and 21. The information of the health check conditions is stored in at least the RNC 10 for each combination between the SGSN and the RNC in the Iu-PS section (or may be stored in the SGSN).

In step S173, similar to step S153, the health check of the Gs section is performed by the SGSNs 20 and 21 and the MSCs 30 through 33. The information of the health check conditions is stored in at least the SGSN for each combination between, the SGSN and the MSC of the Gs section (or may be stored in the MSC). Each of the MSCs 30 through 33 reports the health check information of the Iu-CS section to the SGSN when transmitting the health check signal of the Gs section to the SGSN. To that end, for example, the message to be reported to the SGSN may include the health check information of the Gs section and the health check information of the Iu-CS section. By doing this, the SGSN 20 having received the message may comprehensively manage both the health check information of the Gs section and the health check information of the Iu-CS section (FIG. 14).

The health checks of the Iu-CS section, the Iu-PS section, and the Gs section are periodically or irregularly (e.g., when necessary) performed.

In step S174, to transmit the attach request signal to the RNC 10, the mobile station transmits the RRC connection request (not shown), and the RRC connection is established. After that, the mobile station transmits the attach request signal (Attach Request) to the RNC 10. As the IDNNS in this case, the IMSI is used. The RNC 10 selects the SGSN 20 having a normal health check in the Iu-PS section, and transmits the attach request signal to the SGSN 20.

In step S175, similar to step S155, the SGSN 20 generates the subscriber profile of the mobile station, and issues the P-TMSI. Further, the SGSN 20 selects one MSC for preparing the CS call. This selection is performed based on not only the health check conditions of the Gs section but also the health check conditions of the Iu-CS section. Namely, the MSC having both the normal health check conditions of the Gs section and the normal health check conditions of the Iu-CS section is selected. For explanatory purposes, it is assumed that the MSC 32 is selected.

In step S176, similar to step S156, the SGSN 20 transmits the attach request signal to the selected MSC 32 (Location Update Request). In response, the MSC 32 generates the subscriber profile of the mobile station transmitting the attach request signal, issues the TMSI, and transmits the issued TMSI to the SGSN 20. The SGSN 20 transmits the issued P-TMSI and the received TMSI to the mobile station. By doing this, the attach is completed.

In step S177, similar to step S157, the mobile station transmits the RRC connection request (not shown) to perform the CS call, and the RRC connection is established. After that, the mobile station transmits the CS call request signal (CM Service Request) to the RNC 10. As the IDNNS in this case, the reported TMSI is mused.

In step S178, similar to step S158, the RNC 10 selects the MSC 32 as the connecting destination based on the analysis result of the TMSI of the IDNNS. In this example operation, the MSC 32 having normal communication channels of the Gs and Iu-CS sections is selected. Therefore, the CS call request signal is transmitted to the MSC 32.

In step S179, similar to step S159, based on the generated subscriber profile, the MSC 32 processes the CS call request signal from the mobile station.

As described above, by comprehensively managing the health check information of the Gs and the Iu-CS sections, it may become possible for the SGSN to select an appropriate MSC.

The present invention is described above by referring to a specific embodiment. However, a person skilled in the art may understand that the above embodiment is described for illustrative purpose only and may think of examples of various modifications, transformations, alterations, changes, and the like. For example, the present invention may also be applied to any appropriate mobile communication systems where the radio network connected device (RNC) is connected with plural switching devices. For example, the present invention may also be applied to a W-CDMA system, a W-CDMA system using the HSDPA/HSUPA method, and the like. Further, the present invention may also be applied to any mobile communication system using the Iu-Flex method. Specifically, the present invention may also be applied to any operation modes other than the operations described above in the Iu-Flex method as long as the present invention may be effectively carried out in the operation modes (e.g., a device storing the number of nodes in each pool, types of the nodes, health check method, operation timings of performing the health check, health check results and the like). To promote an understanding of the present invention, the specific values are used as examples throughout the description. However, it should be noted that such specific values are just sample values unless otherwise described, and any other values may be used. In the above description, the present invention is described by being divided into several embodiments. However, it should be noted that the division of the present invention into several embodiments is not an essential element of the present invention. For example, two or more embodiments may be combined on as as-needed basis. For illustrative purposes, the apparatus according to an embodiment of the present invention is described with reference to the functional block diagram. However, such an apparatus may be provided by hardware, software, or a combination thereof. The software may be provided in any appropriate storage medium including, but not limited to, a Random Access Memory (RAM), a flash memory, a Read Only Memory (ROM), an Erasable Programmable Read Only Memory (EPROM), an Electrically Erasable Programmable Read Only Memory (EEPROM), a register, a Hard Disk Drive (HDD), a removable disk, a CD-ROM, a data base, and a server. The present invention is not limited to the embodiment described above, and various modifications, transformations, alterations, changes, and the like are included in the present invention without departing the scope of the present invention.

In the following, examples of the means (systems) taught by the embodiment are described.

According to an embodiment of the present invention, in a mobile communication system including a plurality of switching devices and a radio network control station (RNC) connected to the plural switching devices, the RNC includes a unit that periodically reports information items to the SGSN during the health check process of the Iu-PS section. The information items indicating the health check conditions of the Iu-CS section (i.e., (a) MSC 30-RNC 10, (b) MSC 31-RNC 10, (c) MSC 32-RNC 10, (d) MSC 33-RNC 10) and being stored in the RNC. The SGSN includes a unit to manage the information items indicating the health check conditions of the Iu-CS section reported from the RNC for each of the RNCs and the MSCs. Further, the SGSN includes a unit to select an appropriate MSC which is other than the MSC having an abnormal health check condition of the Iu-CS section (i.e., avoid selecting the MSC that cannot correctly communicate with the RNC in the Iu-CS section) when selecting the MSC that generates a subscriber profile for the CS domain in the attach process.

According to an embodiment of the present invention, in a mobile communication system including a plurality of switching devices and a radio network control station (RNC) connected to the plurality of switching devices, the RNC includes a unit that periodically reports information to the SGSN during the health check process of the Iu-PS section, the information indicating the health check conditions of the Iu-CS section and bering stored in the RNC. Further, the MSC includes a unit that periodically reports information to the SGSN during the health check process of the Gs section, the information indicating the health check conditions of the Iu-CS section and being stored in the MSC. Further, the SGSN includes a unit to manage the health check conditions of the Iu-CS section reported from the MSC for each of the RNCs and MSCs. Further, the SGSN includes a unit to select an appropriate MSC which is other than the MSC having an abnormal health check condition of the Iu-CS section when selecting the MSC that generates a subscriber profile for the CS domain in the attach process.

According to an embodiment of the present invention, in a mobile communication system including a plurality of switching devices and a radio network control station (RNC) connected to the switching devices, the RNC includes a unit that reports information to the SGSN during the attach process, the information indicating the health check conditions of the Iu-CS section and being stored in the RNC. Further, the SGSN includes a unit to select an appropriate MSC which is other than the MSC having an abnormal health check condition of the Iu-CS section by considering the information of the health check conditions of the Iu-CS section reported from the RNC when selecting the MSC that generates a subscriber profile for the CS domain in the attach process.

According to an embodiment of the present invention, it may become possible to avoid selecting the switching device having abnormal health check conditions as the switching device to generate the subscriber profile of the mobile station in the Iu-Flex mobile communication system.

## Claims

1. A radio network Control device in a mobile communication network, comprising:
a first communication unit (64) configured to communicate with a packet switching device in a packet switched domain;
a second communication unit (61) configured to communicate with a circuit switching device in a circuit switched domain; and
a management unit (63) configured to transmit information to the packet switching device, the information indicating whether the radio network control device can correctly communicate with the circuit switching device,
wherein the management unit (63) is configured to transmit the information when transmitting a signal to the packet switching device via the first communication unit (64), the signal indicating whether the radio network control device can correctly communicate with the packet switching device, or when transmitting an attach request signal to the packet switching device via the first communication unit (64), the attach request signal being transmitted from a mobile station,

2. A packet switching device in a packet switched domain in a mobile communication network, comprising:
a first communication unit (124) configured to receive first information indicating whether a radio network control device can correctly communicate with each of one or more circuit switching devices in a circuit switched domain;
a storage unit (122) configured to store second information indicating whether the each of the one or more circuit switching devices can correctly communicate with the packet switching device;
a management unit (123) configured to, when receiving an attach request signal from the radio network control device, select a circuit switching device based on the first and the second information, the circuit switching device being configured to generate a subscriber profile of a mobile station; and
a second communication unit (121) configured to transmit the attach request signal to the circuit switching device selected by the management unit,
wherein the first communication unit (124) is configured to receive the first information when receiving a signal from the radio network control device, the signal indicating whether the network control device can correctly communicate with the packet switching device, or when receiving the attach request signal from the radio network control device, the attach request signal being transmitted from the mobile station.

3. An information reporting method comprising:
acquiring, by a radio network control device, first information indicating whether communications can be correctly performed between the radio control device and each of one or more circuit switching devices in a circuit switched domain, and
transmitting, by the radio network control device, the first information, to a packet switching device in a packet switched domain when transmitting second information to the packet switching device, the second information indicating whether communication can be correctly performed between the radio network control device and the packet switching device, or when transmitting an attach request signal to the packet switching device, the attach request signal being transmitted from a mobile station.

4. A circuit exchange device in a circuit switched domain in a mobile communication network, comprising:
a first communication unit (94) configured to communicate with a packet switching device in a packet switched domain; and
a second communication unit (91) configured to communicate with a radio network control device,
wherein the first communication unit (94) is configured to transmit first information to the packet switching device, the first information indicating whether communications can be correctly performed between the circuit exchange device and the radio network control device, when transmitting second information to the packet switching device, the second information indicating whether communications can be correctly performed between the circuit switching device and the packet switching device.

5. A packet switching device in a packet switched domain in a mobile communication network, comprising:
a communication unit (124) configured to receive information indicating whether communications can be correctly performed between each of one or more circuit switching devices in a circuit switched domain and a radio network control device when receiving information from each of the one or more circuit switching devices, the information indicating whether communications can be correctly performed between each of the one or more circuit switching devices and the packet switching device; and
a management unit (123) configured to, when receiving an attach request signal from the radio network control device, select one of the circuit switching devices based on first and second information, the first information indicating whether the radio network control device can correctly communicate with each of the one or more circuit switching devices, the second information indicating whether the each of the one or more circuit switching devices can correctly communicate with the packet switching device,
wherein, the one of the circuit switching devices selected by the management unit (123) is configured to generate a subscriber profile of a mobile station, and
wherein the communication unit (124) is configured to transmit the attach request signal to the circuit switching device selected by the management unit.

6. An information reporting method comprising:
acquiring, by a circuit switching device in a circuit switched domain, first information indicating whether communications can be correctly performed between the circuit switching domain and a radio network control device;
managing, by the circuit switching device, second information indicating whether communications can be correctly performed between the circuit switching device and a packet switching device in a packet switched domain; and
transmitting, by the circuit switching device, the first information to the packet switching device when transmitting the second information to the packet switching device.
